# EUROPEAN PATENT SPECIFICATION

(11) **EP 3 366 642 B1**
(45) Date of publication and mention of the grant of the patent: **06.05.2020**
(21) Application number: 17157466.8
(22) Date of filing: 22.02.2017
(51) Int. Cl.: C01B 35/10, C01B 35/12, G02F 1/355

(54) **NONLINEAR OPTICAL MATERIALS AND METHOD FOR THEIR PRODUCTION**
NICHTLINEAR OPTISCHE MATERIALIEN UND VERFAHREN ZU DEREN HERSTELLUNG
MATÉRIAUX OPTIQUES NON LINÉAIRES ET LEUR PROCÉDÉ DE PRODUCTION

(43) Date of publication of application: 29.08.2018
(73) Proprietor: Universität Augsburg, 86159 Augsburg (DE)
(72) Inventor: HÖPPE, Henning, 86159 Augsburg (DE); JANTZ, Stephan, 85716 Unterschleißheim (DE); DIALER, Marwin, 81243 München (DE)
(74) Representative: Vossius & Partner Patentanwälte Rechtsanwälte mbB

(56) References cited:
- US-A1- 2016 130 723
- Colin David Mcmillen: "Hydrothermal crystal growth of oxides for optical applications", , 1 May 2007 (2007-05-01), XP055397651, Retrieved from the Internet: URL:http://tigerprints.clemson.edu/cgi/vie wcontent.cgi?article=1056&context=all_diss ertations [retrieved on 2017-08-09]

## Description

Nonlinear optical materials, such as SHG (second-harmonic generation) materials or THG (third-harmonic generation) materials, can be used to multiply the frequency of electromagnetic radiation, in particular of the high intensity light emitted by lasers. Thus, for example, green, blue or even UV lasers can be built relatively easily using the long-wave emission of e.g. a Nd:YAG laser (λ=1064 nm).

Current technically significant SHG materials include mainly
- β-Ba(BO₂)₂ (BBO, beta barium borate),
- LiB₃O₅ (LBO, lithium triborate),
- KTiO(PO₄) (KTP, potassium titanyl phosphate),
- (NH₄)H₂PO₄ (ADP, ammonium dihydrogen phosphate),
- KH₂PO₄ (KHP, potassium dihydrogen phosphate),
- AgGaS₂ (AGS, silver gallium sulfide)
- AgGeSe₂ (AGSe, silver gallium selenide)

BiB₃O₆ (BiBO, bismuth borate) can also be used as THG material for frequency tripling (A.V. Egorysheva et al., Inorganic Materials 2009, Vol. 45, No. 13, 1461-1476).

The essential prerequisite to obtain NLO (nonlinear optical) materials (or materials having nonlinear optical characteristics) is a non-centrosymmetric crystal structure of these materials. To ensure efficient SHG / THG conversion and thus technical and also economic significance and applicability, the ability to achieve phase matching is a further important property of NLO materials (R. J. D. Tilley, Colour and the Optical Properties of Materials, 2nd Ed., John Wiley & Sons, Ltd., 2011).

C. Mcmillen, "Hydrothermal Crystal Growth of Oxides for Optical Applications" (2007), All Dissertations, Paper 56, discloses the preparation of Ba₂B₅O₉Cl and BaB₂O₃(OH)₂.

In the context of the present invention, it has been found that the reaction of the hydroxides or halides of defined metals or metalloids with diboron trioxide (B₂O₃), which can be carried out at moderate temperatures, makes accessible a variety of novel borate based nonlinear optical materials which fulfil the above requirements.

Thus, the present invention provides crystalline, nonlinear optical materials having the compositions shown in the formulae below, as well as a method for their production. The invention further provides applications for these non-linear optical materials, including optical devices wherein the materials are included as materials for the frequency multiplication of electromagnetic radiation.

In further detail, the invention provides, as a first aspect, a crystalline, nonlinear optical material having a composition represented by formula (I):

(I) M^{II}[B₂O₃X₂]

wherein
M^{II} is selected from the divalent cations of Sn, Pb, Be, Mg, Ca, Sr, and Ba, or from combinations of two or more of these cations,
X is selected from F, Cl, Br and I, or from combinations thereof.

A further aspect of the invention relates to an optical device comprising
(i) a generator for a beam of electromagnetic radiation, and
(ii) means to direct the beam of electromagnetic radiation as an incident beam into a crystalline, nonlinear optical material, and to allow a beam of electromagnetic radiation to emerge from the same crystalline material,
wherein the crystalline, nonlinear optical material is a material in accordance with the above first aspect of the invention.

Further aspects concern the use of the crystalline, nonlinear optical material in accordance with the first aspect of the invention for the frequency multiplication of electromagnetic radiation or as a luminescent material.

Still a further aspect relates to methods for the preparation of the crystalline, nonlinear optical material in accordance with the first aspect above.

Thus, the invention provides a first method for the preparation of a crystalline, nonlinear optical material of formula (I) as defined above, comprising the step of reacting a compound of formula M^{II}X₂, wherein M^{II} and X are defined as in formula (I), with B₂O₃.

A further method for the preparation of a crystalline, nonlinear optical material of formula (I) as defined above comprises the step of reacting a compound of formula M^{II}[BX₄]₂, wherein M^{II} and X are defined as for formula (I), with B₂O₃.

For the crystalline, nonlinear optical material having a composition represented by formula (I):

(I) M^{II}[B₂O₃X₂]

the meanings and preferred meanings of variables will be discussed in the following.

X is selected from F, Cl, Br and I or from combinations thereof, and is preferably one of F, Cl, Br and I. Most preferred as X is F.

M^{II} is selected from the divalent cations of Sn, Pb, Be, Mg, Ca, Sr, and Ba or from combinations of two or more of these cations. Preferably, it is selected from the cations of Sn and Pb or from combinations thereof. Generally, it is preferred that M^{II} is a single type of cation, so it is further preferred that M^{II} is one of the divalent cations of Sn and Pb. Most preferably, it is the divalent cation of Sn.

From the above, it will be understood that, in a more preferred embodiment, the crystalline, nonlinear optical material of formula (I) in accordance with the invention has a composition of the formula (Id):

(Id) M^{II}[B₂O₃F₂],

wherein M^{II} is defined as above, including the preferred embodiments. Thus, in a more strongly preferred embodiment, the material has a composition of the formula (I d) and M^{II} is one of the divalent cations of Sn and Pb, and most preferred in this context is a material of the composition Sn[B₂O₃F₂].

The crystalline, nonlinear optical material of formulae (I), (I d) and its preferred embodiments described herein generally has a crystalline structure (as elucidated by single-crystal X-ray diffraction) wherein multiple layers of BO₃Y tetrahedra are separated by layers of the cations M^{II}. The BO₃Y tetrahedra are provided by a central B atom contained in a tetrahedral environment formed by O and Y, wherein Y is either X as defined above or O, depending on the composition of the material, and independently for each tetrahedron. The layers of BO₃Y tetrahedra are formed by the BO₃Y tetrahedra linked via the three corners provided by O, and the B-Y bonds are aligned perpendicular to the plane of the layer, and point along the same direction.

The crystalline, nonlinear optical materials in accordance with the invention (i.e. the materials of formulae (I) and (I d), including their further preferred embodiments) are solid state materials. They can be provided and used as nonlinear optical materials in the form of a polycrystalline material (powder), or in the form of single crystals.

As will be understood by the skilled person, the reference to a nonlinear optical material indicates that the material shows nonlinear optical characteristics, in particular SHG and/or THG characteristics. To show these nonlinear optical characteristics the crystal structure of the materials in accordance with the invention, which is typically determined via an X-ray diffraction method, is a non-centrosymmetric structure (i.e. a structure belonging to a point group or a space group, respectively, which does not show an inversion center). In the context of the present invention, it was found that the materials of formula (I) and (I d), respectively, have a crystal structure which belongs to the point group 3*m* (using the international symbol notation).

The nonlinear optical properties of the material in accordance with the invention can be conveniently demonstrated by determining the SHG or THG characteristics, typically by subjecting the material to irradiation with a laser beam and analyzing the emitted beam. For example, a pulsed laser system (e.g. a Nd:YLF laser operating a λ=1054 nm, power 1W) can be used to generate an incident beam which is directed to the material of interest and a photomultiplier and a photon counter detect the intensity of the generated and emitted light beam (comprising ½ (SHG) or 1/3 (THG) the wavelength of the incident beam) in comparison to the intensity of the incident beam. A suitable setup is described by L. Bayarjagal et al., in Applied Physics Letters 95, 061907 (2009),

### Applications

Due to their nonlinear optical characteristics, the materials in accordance with the present invention (i.e. the materials of formulae (I) and (I d),including their further preferred embodiments) allow a multiplication of the frequency of electromagnetic radiation. Thus, an aspect of the invention is the use of the crystalline, nonlinear optical material in accordance with the invention for the frequency multiplication of electromagnetic radiation. Typically, frequency doubling or frequency tripling is observed, i.e. the materials are second harmonic generation (SHG) materials (frequency doubling) or third harmonic generation (THG) materials (frequency tripling).

As will be understood, the frequency multiplication is beneficial especially in the case of coherent electromagnetic radiation, in particular in the case of radiation emitted from a laser. Preferred examples of lasers are solid state lasers, more preferred as a source of the electromagnetic radiation is a Nd:YAG-laser.

The electromagnetic radiation which is subjected to frequency multiplication using the crystalline, nonlinear optical material in accordance with the invention is typically light, preferably laser light, in the wavelength region from 200 to 1600 nm, preferably 800 to 1600 nm.

To achieve a frequency multiplication, such as a doubling or tripling, of a frequency of electromagnetic radiation, a beam of electromagnetic radiation can be directed as an incident beam into the crystalline, nonlinear optical material in accordance with the invention, e.g. into a single crystal of the material or into an assembly of crystals, and to allow a beam of electromagnetic radiation to emerge from the same crystalline material. The thus emerging beam contains at least one frequency which is multiplied compared to a frequency of the incident beam. As noted above, the incident beam is preferably emitted from a laser at a defined wavelength, and the emerging beam has a wavelength which is half or one third of that of the incident beam.

In order to ensure a high efficiency of the frequency multiplication, it may be useful to adjust the position of the crystalline, nonlinear optical material in accordance with the invention towards the incident beam and/or to adjust the temperature at which the crystalline, nonlinear optical material in accordance with the invention is held in order to achieve phase matching.

In a further closely related aspect, the invention provides an optical device comprising
(i) a generator for a beam of electromagnetic radiation, and
(ii) means to direct the beam of electromagnetic radiation as an incident beam into a crystalline, nonlinear optical material in accordance with the invention, and to allow a beam of electromagnetic radiation to emerge from the same crystalline material.

Also for this aspect, the generator for a beam of electromagnetic radiation is preferably a laser, Accordingly, the radiation is typically light, preferably laser light, in the wavelength region from 200 to 1600 nm, preferably 800 to 1600 nm.

A further aspect of the invention relates to the use of the crystalline, nonlinear optical materials in accordance with the invention as a luminescent material. For this application, materials in accordance with the invention are typically selected which comprise one or more s² ions, in particular Sb³⁺, Sn²⁺, Pb²⁺, TI⁺ or one or more trivalent lanthanide ions, in particular selected from Ce, Pr, Nd, Sm, Eu, Gd, Tb, Dy, Ho, Er, Tm, and Yb.

### Preparation

In accordance with a further aspect of the invention, a method is provided for the preparation of the crystalline, nonlinear optical material in accordance with the invention.

Thus, the invention provides a first method for the preparation of a crystalline, nonlinear optical material of formula (I) or (I d) as defined above, comprising the step of reacting a compound of formula M^{II}X₂, wherein M^{II} and X are defined as in formula (I) or (I d), including all further preferred variants thereof as defined herein, with B₂O₃.

For the preparation of a compound of a material of formula (I) using this method, a compound of formula M^{II}X₂, wherein M^{II} and X are defined as in formula (I), is reacted with B₂O₃. For the preparation of a compound of a material of formula (I d) using this method, a compound of formula M^{II}F₂, wherein M^{II} is defined as in formula (I d), is reacted with B₂O₃.

A further method for the preparation of a crystalline, nonlinear optical material of formula (I) or (I d) as defined above comprises the step of reacting a compound of formula M^{II}[BX₄]₂, wherein M^{II} and X are defined as for formula (I) or (I d), including all further preferred variants thereof as defined herein, with B₂O₃.

For the preparation of a compound of a material of formula (I) using this method, a compound of formula M^{II}[BX₄]₂, wherein M^{II} and X are defined as in formula (I), is reacted with B₂O₃. For the preparation of a compound of a material of formula (I d) using this method, a compound of formula M^{II}[BF₄]₂, wherein M^{II} is defined as in formula (I d), is reacted with B₂O₃.

It will be understood that, in all of the methods discussed herein, the selection of the compounds used as starting materials in the reaction and comprising one or more of M^{II} and X will be carried out with a view to the composition of the target compound, i.e. one or more compounds should be present in the reaction which provide the cation/the cations M^{II} that will be contained in the target compound, and compounds should be present which provide the group/the groups X that will be contained in the target compound.

It will also be understood that, in terms of the definition of the cations M^{II} and in terms of the definition of X, the same preferences apply in the context of the methods of preparation as for the crystalline, nonlinear optical material in accordance with the invention.

In all of the methods described herein, the reactants are typically mixed prior to the reaction, generally in stoichiometric amounts with a view to the composition of the target material of formula (I) or (I d), or the preferred embodiments thereof. Where appropriate, mixing is carried out under a protective atmosphere such as a noble gas atmosphere. They are then reacted in a suitable reaction vessel.

Preferably, the reaction is carried out in a closed reaction system, i.e. a reaction system wherein a barrier is provided around the reactants which cannot be penetrated by the atmosphere around the reactants. As an example for such a closed reaction system, a fused silica ampoule can be mentioned. More preferably, a closed reaction system is used which is evacuated prior to the reaction (preferably to a remaining pressure of ≤ 5·10⁻² mbar, more preferably ≤ 2·10⁻² mbar). As will be understood by the skilled person, the reaction is carried out at an elevated temperature. Typically, the temperature is 100 °C or more, preferably 200 °C or more, and more preferably 250 °C or more. It is preferably 550 °C or less, more preferably 500 °C or less. Thus, a typical reaction temperature is in the range of 100 to 550 °C, preferably 200 to 500 °C. Typically, the mixture of the reactants is kept at the elevated temperature for a period of 12 to 200 hours, preferably 70 to 150 hours, to carry out the reaction.

Thus, in one strongly preferred embodiment of the method in accordance with the invention, a starting compound of the formula M^{II}F₂, wherein M^{II} is one of the divalent cations of Sn, Pb, Be, Mg, Ca, Sr, and Ba, more preferably SnF₂ or PbF₂, is reacted with B₂O₃ to yield the crystalline, nonlinear optical material of the formula (I d) M^{II}[B₂O₃F₂], wherein M^{II} is equally one of the divalent cations of Sn, Pb, Be, Mg, Ca, Sr, and Ba, and more preferably to yield Sn[B₂O₃F₂] or Pb[B₂O₃F₂]. Typically, the reactants are mixed prior to the reaction at an equimolar ratio, i.e. 1 mol M^{II}F₂ per 1 mol B₂O₃. In line with the above, the reaction is preferably carried out in a closed reaction system. The preferred reaction temperature is equally as defined above. Specifically for the preparation of Sn[B₂O₃F₂], the temperature is more preferably in the range of 300 to 380 °C, and even more preferably 350 °C. For the preparation of Pb[B₂O₃F₂], the temperature is more preferably in the range of 400 to 500 °C, and even more preferably 440 to 480 °C.

### Examples

### Example 1 (Reference Example)

SbB₃O₆ was obtained from SbF₃ and B₂O₃. As both starting materials are hygroscopic and even traces of water result in the formation of hydrofluoric acid, the preparation was conducted in an argon-filled glovebox. The educts were ground in a 1:2 molar ratio in an agate mortar and filled into a boron nitride (BN) crucible. The BN crucible was put into a fused silica-glass tube which was evacuated to approx. 2·10⁻² mbar before closing the ampoule. Typically, 0.4 g educt-mixture was used and the ampoules were 7-10 cm long. The ampoule was heated in an electric tube furnace with 25 °C/h to 300 °C and held isothermally for 150 hours before cooling to room temperature with 25 °C/h. The obtained product was a fine, crystalline, slightly greyish powder.

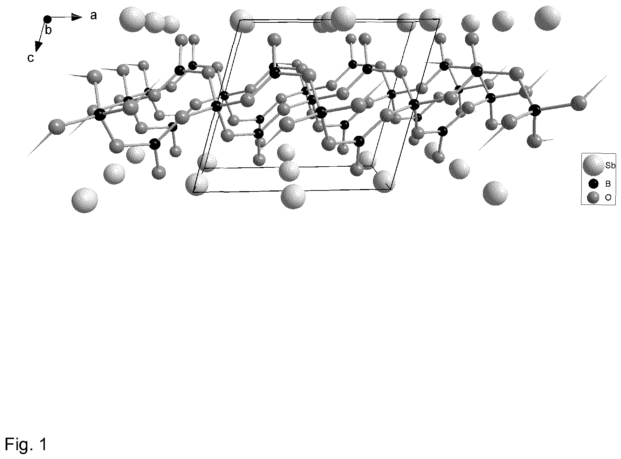

The crystal structure was analysed by single-crystal X-ray diffraction. The borate SbB₃O₆ is isostructural with BiB₃O₆ (R. Fröhlich et al., Acta Crystallogr. C 1984, 40, 343-344). It crystallises in the monoclinic, non-centrosymmetric spacegroup *C*2 (no. 5) with lattice parameters *a* = 7.1207(3) Å, *b* = 4.9784(2) Å, *c* = 6.3980(3) Å and *β* = 105.8581(11)°. Condensed (corner-sharing) BO₄ tetrahedra and trigonal planar BO₃ units in the ratio 1:2 build a two-dimensional network parallel to (001) (Fig. 1). In between these networks, the Sb³⁺ cations form a second layer in (001).

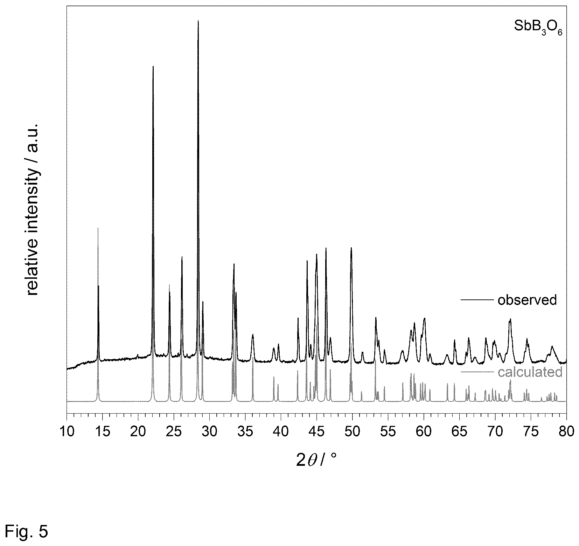

In order to verify the phase purity of the compound, a powder X-ray diffraction pattern was recorded and compared to the one calculated from the structural model (Fig. 5).

An examination of the SHG activity of SbB₃O₆ evinces a SHG conversion in the regime of known highly efficient SHG materials (here BaTiO₃; Tab. 1). Phase matching is also applicable.

### Example 2

Sn[B₂O₃F₂] was obtained from SnF₂ and B₂O₃. As both starting materials are hygroscopic and even traces of water result in the formation of hydrofluoric acid, the preparation was conducted in an argon-filled glovebox. The educts were ground in a 1:1 molar ratio in an agate mortar, pressed to a pellet and filled into a silver crucible which was closed by a screw cap (inner volume approx. 0.6 ml). Silver is used as crucible material due to its relatively high resistivity against fluorine containing compounds. The closed silver crucible was put into a fused silica-glass tube which was evacuated to approx. 2.10⁻² mbar before closing the ampoule. Typically, 0.4 g educt-mixture was used and the ampoules were 7-10 cm long. For the synthesis of a microcrystalline powder (diameter of crystallites < 30 µm), the ampoule was heated in an electric tube furnace with 25 °C/h to 350 °C and maintained at this temperature for 72 hours before cooling to room temperature with 25 °C/h. The obtained product was a fine, crystalline, slightly beige powder.

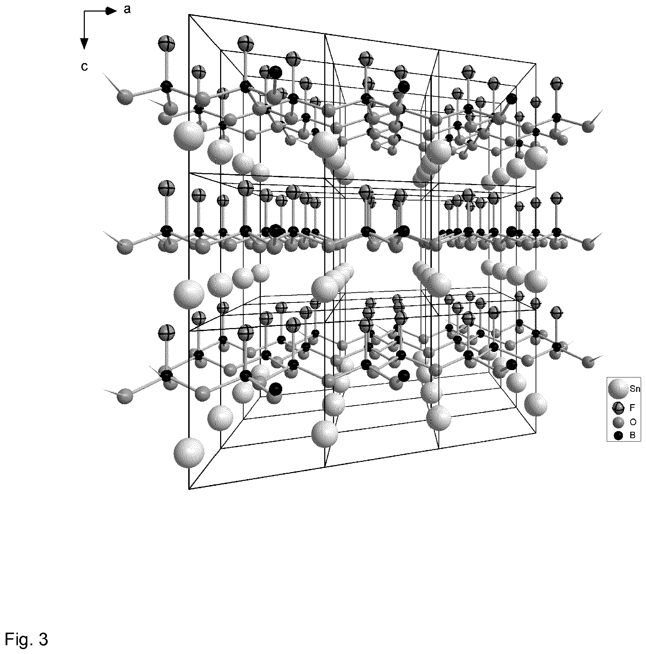

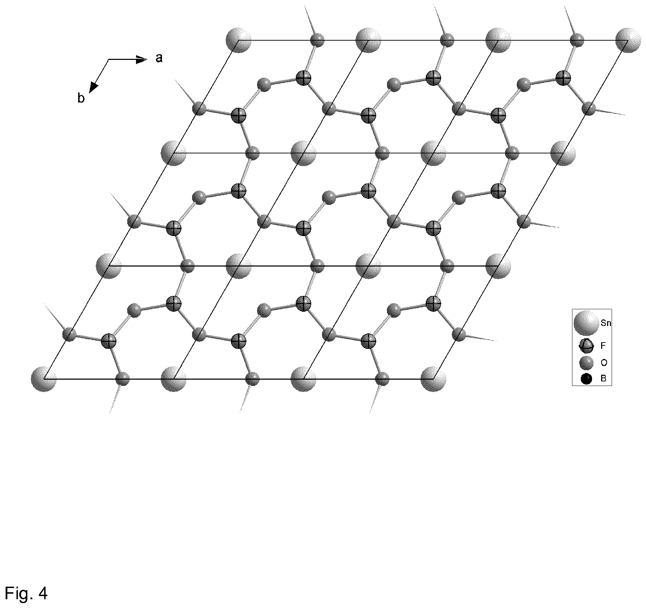

The crystal structure was elucidated by single-crystal X-ray diffraction. Sn[B₂O₃F₂] is a fluorooxoborate, comprising covalent B-F bonds as well as covalent B-O bonds. It crystallises in the trigonal, non-centrosymmetric space group *P*31*m* (no. 157) with lattice parameters *a* = 4.5072(6) Å and *c* = 4.7624(10) Å. Within the (001) plane, corner-sharing BO₃F tetrahedra form a two-dimensional infinite layer (Fig. 3). The B-F bonds are aligned perpendicular to the plane and point all along the same direction. Looking along the [001] direction, the structure comprises a "honeycomb" structure, built up by six BO₃F tetrahedra (Fig. 4). The Sn²⁺ cations are located in the centre of each honeycomb, shifted along [001], forming a layer parallel to (001) as well.

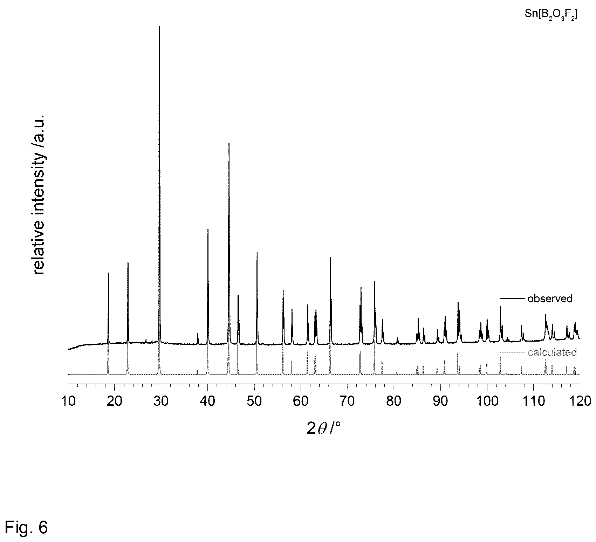

In order to verify the phase purity of the compound, a powder X-ray diffraction pattern was recorded and compared to the one calculated from the structural model (Fig. 6). Solid state NMR measurements confirm the presence of covalent B-F bonds and boron adopting an exclusively tetrahedral environment.

An examination of the SHG activity of Sn[B₂O₃F₂] evinces a SHG conversion in the regime of known highly efficient SHG materials (here BaTiO₃; Tab. 1). Phase matching is also applicable.

**Table 1**

| Material | Intensity | Background | SGH Signal | Error |
|---|---|---|---|---|
| | [counts] | [counts] | [counts] | [counts] |
| Quartz | 1655 | 20 | 1635 | 23 |
| Corundum (Al₂O₃) | 27 | 17 | 10 | 0 |
| Barium titanate (BaTiO₃) | 15664 | 79 | 15585 | 216 |
| Sn[B₂O₃F₂] | 17426 | 33 | 17393 | 241 |
| | 17187 | 32 | 17155 | 237 |
| | 17410 | 29 | 17381 | 241 |
| Sb[B₃O₆] | 15653 | 24 | 15629 | 216 |
| | 16167 | 56 | 16111 | 223 |
| | 15445 | 33 | 15412 | 213 |

### Description of Figures:

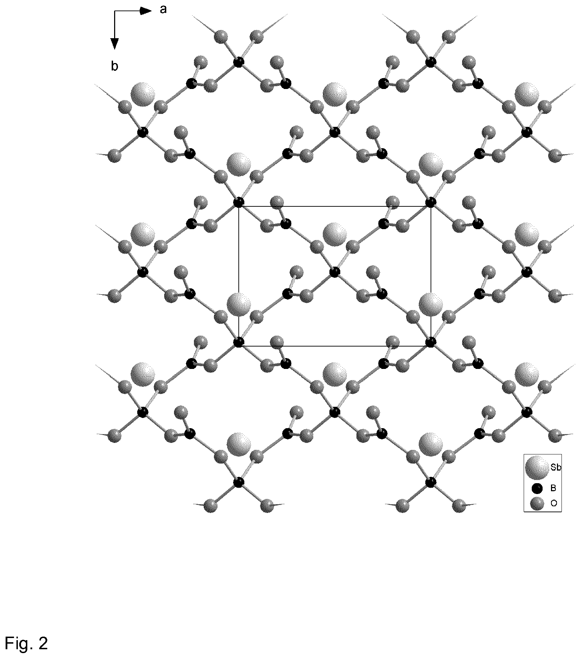

Figs. 1 and 2 provide a schematic illustration of the crystal structure of SbB₃O₆ prepared in Example 1.
Figs. 3 and 4 provide a schematic illustration of the crystal structure of Sn[B₂O₃F₂] prepared in Example 2.
Fig. 5 shows a comparison of a measured and a calculated powder X-ray diffraction pattern of SbB₃O₆ prepared in Example 1.
Fig. 6 shows a comparison of a measured and a calculated powder X-ray diffraction pattern of Sn[B₂O₃F₂] prepared in Example 2.

## Claims

1. A crystalline, nonlinear optical material having a composition represented by formula (I):
(I) M^{II}[B₂O₃X₂]
wherein
M^{II} is selected from the divalent cations of Sn, Pb, Be, Mg, Ca, Sr, and Ba or from combinations of two or more of these cations,
X is selected from F, Cl, Br and I or from combinations thereof.

2. The crystalline, nonlinear optical material in accordance with claim 1, which has a composition represented by formula (I d)
(Id) M^{II}[B₂O₃F₂]
wherein:
M^{II} is selected from the divalent cations of Sn, Pb, Be, Mg, Ca, Sr, and Ba.

3. The crystalline, nonlinear optical material in accordance with claim 2, wherein M^{II} is selected from the divalent cations of Sn and Pb.

4. An optical device comprising
(i) a generator for a beam of electromagnetic radiation, and
(ii) means to direct the beam of electromagnetic radiation as an incident beam into a crystalline, nonlinear optical material, and to allow a beam of electromagnetic radiation to emerge from the same crystalline material,
wherein the crystalline, nonlinear optical material is a material in accordance with any of claims 1 to 3.

5. Use of a crystalline, nonlinear optical material in accordance with any of claims 1 to 3 for the frequency multiplication of electromagnetic radiation.

6. Use of a crystalline, nonlinear optical material in accordance with any of claims 1 to 3 as a luminescent material.

7. A method for the preparation of a crystalline, nonlinear optical material of formula (I) or (I d) in accordance with any of claims 1 to 3, comprising the step of reacting
a compound of formula M^{II}X₂,
wherein M^{II} and X are defined as in formula (I) or (I d),
with B₂O₃.

8. A method for the preparation of a crystalline, nonlinear optical material of formula (I) or (I d) in accordance with any of claims 1 to 3, comprising the step of reacting
a compound of formula M^{II}[BX₄]₂,
wherein M^{II} and X are defined as in formula (I) or (I d),
with B₂O₃.

9. The method in accordance with claim 7 or 8, wherein the reaction is carried out at a reaction temperature of 100 °C or more and 550 °C or less.

10. The method in accordance with claim 9, wherein the reaction is carried out at a reaction temperature of 500 °C or less.

11. The method in accordance with claim 10, wherein the reaction is carried out at a reaction temperature of 450 °C or less.

## Patentansprüche

1. Ein kristallines, nichtlinear optisches Material mit einer Zusammensetzung dargestellt durch Formel (I):
(I) M^{II}[B₂O₃X₂]
wobei
M^{II} aus den zweiwertigen Kationen von Sn, Pb, Be, Mg, Ca, Sr und Ba oder aus Kombinationen von zwei oder mehreren dieser Kationen ausgewählt ist,
X aus F, Cl, Br und I oder aus Kombinationen davon ausgewählt ist.

2. Das kristalline, nichtlinear optische Material gemäß Anspruch 1, welches eine Zusammensetzung dargestellt durch die Formel (Id) aufweist
(Id) M^{II}[B₂O₃F₂]
wobei:
M^{II} aus den zweiwertigen Kationen von Sn, Pb, Be, Mg, Ca, Sr und Ba ausgewählt ist.

3. Das kristalline, nichtlinear optische Material gemäß Anspruch 2, wobei M^{II} aus den zweiwertigen Kationen von Sn und Pb ausgewählt ist.

4. Eine optische Vorrichtung, umfassend
(i) einen Generator für einen Strahl elektromagnetischer Strahlung, und
(ii) ein Mittel, um den Strahl elektromagnetischer Strahlung als einfallenden Strahl in ein kristallines, nichtlinear optisches Material zu leiten, und um das Austreten eines Strahls elektromagnetischer Strahlung aus dem selben kristallinen Material zu erlauben,
wobei das kristalline, nichtlinear optische Material ein Material gemäß einem der Ansprüche 1 bis 3 ist.

5. Verwendung eines kristallinen, nichtlinear optischen Materials gemäß einem der Ansprüche 1 bis 3 zur Frequenzvervielfachung von elektromagnetischer Strahlung.

6. Verwendung eines kristallinen, nichtlinear optischen Materials gemäß einem der Ansprüche 1 bis 3 als ein lumineszierendes Material.

7. Ein Verfahren zur Herstellung eines kristallinen, nichtlinear optischen Materials der Formel (I) oder (Id) gemäß einem der Ansprüche 1 bis 3, umfassend den Schritt des Umsetzens
einer Verbindung der Formel M^{II}X₂,
wobei M^{II} und X wie in Formel (I) oder (Id) definiert sind,
mit B₂O₃.

8. Ein Verfahren zur Herstellung eines kristallinen, nichtlinear optischen Materials der Formel (I) oder (I d) gemäß einem der Ansprüche 1 bis 3, umfassend den Schritt des Umsetzens
einer Verbindung der Formel M^{II}[BX₄]₂,
wobei M^{II} und X wie in Formel (I) oder (Id) definiert sind,
mit B₂O₃.

9. Das Verfahren gemäß Anspruch 7 oder 8, wobei die Reaktion bei einer Reaktionstemperatur von 100 °C oder mehr und 550 °C oder weniger durchgeführt wird.

10. Das Verfahren gemäß Anspruch 9, wobei die Reaktion bei einer Reaktionstemperatur von 500 °C oder weniger durchgeführt wird.

11. Das Verfahren gemäß Anspruch 10, wobei die Reaktion bei einer Reaktionstemperatur von 450 °C oder weniger durchgeführt wird.

## Revendications

1. Matériau optique non linéaire, cristallin présentant une composition représentée par la formule (I) :
(I) M^{II}[B₂O₃X₂]
dans laquelle
M^{II} est choisi parmi les cations divalents de Sn, Pb, Be, Mg, Ca, Sr, et Ba ou des combinaisons de deux ou plusieurs de ces cations,
X est choisi parmi F, Cl, Br et I ou des combinaisons de ceux-ci.

2. Matériau optique non linéaire, cristallin selon la revendication 1, qui présente une composition représentée par la formule (I d)
(Id) M^{II}[B₂O₃F₂]
dans laquelle :
M^{II} est choisi parmi les cations divalents de Sn, Pb, Be, Mg, Ca, Sr, et Ba.

3. Matériau optique non linéaire, cristallin selon la revendication 2, dans lequel
M^{II} est choisi parmi les cations divalents de Sn et Pb.

4. Dispositif optique comprenant
(i) un générateur pour un faisceau de rayonnement électromagnétique, et
(ii) un moyen pour diriger le faisceau de rayonnement électromagnétique comme un faisceau incident dans un matériau optique non linéaire, cristallin, et pour permettre à un faisceau de rayonnement électromagnétique d'émerger à partir du même matériau cristallin,
dans lequel le matériau optique non linéaire, cristallin est un matériau selon l'une quelconque des revendications 1 à 3.

5. Utilisation d'un matériau optique non linéaire, cristallin selon l'une quelconque des revendications 1 à 3 pour la multiplication de fréquence de rayonnement électromagnétique.

6. Utilisation d'un matériau optique non linéaire, cristallin selon l'une quelconque des revendications 1 à 3 comme un matériau luminescent.

7. Procédé pour la préparation d'un matériau optique non linéaire, cristallin de formule (I) ou (I d) selon l'une quelconque des revendications 1 à 3, comprenant l'étape de réaction d'un composé de formule M^{II}X₂,
dans lequel M^{II} et X sont définis comme dans la formule (I) ou (I d),
avec B₂O₃.

8. Procédé pour la préparation d'un matériau optique non linéaire, cristallin de formule (I) ou (I d) selon l'une quelconque des revendications 1 à 3, comprenant l'étape de réaction d'un composé de formule M^{II}[BX₄]₂,
dans laquelle M^{II} et X sont définis comme dans la formule (I) ou (I d), avec B₂O₃.

9. Procédé selon la revendication 7 ou 8, dans lequel la réaction est réalisée à une température de réaction de 100°C ou supérieure et de 550°C ou inférieure.

10. Procédé selon la revendication 9, dans lequel la réaction est réalisée à une température de réaction de 500°C ou inférieure.

11. Procédé selon la revendication 10, dans lequel la réaction est réalisée à une température de réaction de 450°C ou inférieure.
